# EUROPEAN PATENT APPLICATION

(11) **EP 3 467 003 A1**
(43) Date of publication of application: **10.04.2019**
(21) Application number: 17802800.7
(22) Date of filing: 23.05.2017
(51) Int. Cl.: C08G 63/672, B32B 27/36

(54) **POLYARYLATE RESIN, FILM FORMED FROM SAME AND LAMINATE**

(30) Priority: 27.05.2016 JP 2016105781
(71) Applicant: Unitika Ltd., Amagasaki-shi, Hyogo 660-0824 (JP)
(72) Inventor: MURATA, Akira, Uji-shi Kyoto 611-0021 (JP); AKIZUKI, Takamasa, Uji-shi Kyoto 611-0021 (JP); MATSUMOTO, Chiho, Uji-shi Kyoto 611-0021 (JP); HAGIWARA, Keita, Uji-shi Kyoto 611-0021 (JP)
(74) Representative: Vossius & Partner Patentanwälte Rechtsanwälte mbB
(86) International application number: PCT/JP2017/019189
(87) International publication number: WO 2017/204214

(57) **Abstract**

The present invention provides a polyarylate resin which is excellent in heat-resisting properties, abrasion-resisting properties, solubility properties in non-halogenated organic solvents, a water vapor-barrier property, mechanical properties, liquid sag-resisting properties and deformation-resisting properties (such as adhesive properties). The present invention relates to a polyarylate resin comprising a dihydric phenol residue shown in general formula (1) and an aromatic dicarboxylic acid residue shown in general formula (2), a film comprising the same and a laminated product thereof: 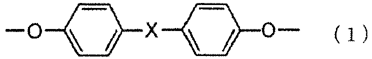 (wherein X represents a liner or branched bivalent hydrocarbon group having 4 to 8 carbon atoms.) 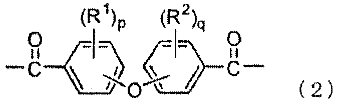 (wherein R¹ and R² respectively and independently represent a monovalent hydrocarbon group having 1 to 6 carbon atoms, which may be substituted by one or more halogen atoms, or a halogen atom, and p and q respectively and independently represent an integer of 0 to 4.).

## Description

### TECHNICAL FIELD

The present invention relates to a polyarylate resin excellent in heat-resisting properties, abrasion-resisting properties, solubility properties in non-halogenated organic solvents, a water vapor-barrier property, mechanical properties, liquid sag-resisting properties and deformation-resisting properties, and a film formed from same and a laminate.

### BACKGROUND ART

Since a polyarylate resin is excellent in heat-resisting properties, mechanical strength and transparency, applications to the wide fields such as electric and electronic applications, automotive applications, and machinery applications are expected. In recent years, applications of the polyarylate resin to a liquid crystal display are being studied, making use of properties thereof.

When the polyarylate resin is used in the liquid crystal display, since the polyarylate resin is dissolved in an organic solvent at an ordinary temperature, and is coated as a resin solution on a display, solubility properties in organic solvents are required, and in recent years, from a viewpoint of the environmental influence and safety of workers, solubility properties in non-halogenated organic solvents are required.

Additionally, in recent years, since physical conditions of a resin used for an optical film in a liquid crystal display etc. become severe, a resin having higher abrasion-resisting properties than those of general phthalic acid-derived polyarylate is required.

In order to solve the above-mentioned problems, Patent Literature 1 discloses a polyarylate resin containing diphenyl ether-4,4'-dicarboxylic acid.

Meanwhile, Patent Literatures 2 and 3 disclose a polyarylate resin containing 2,2-bis(4-hydroxyphenyl)-4-methylpentane.

### CITATIONS LIST

### PATENT LITERATURE

Patent Literature 1: JP-A-2006-290959
Patent Literature 2: JP-A-2013-7806
Patent Literature 3: JP-A-2013-10813

### SUMMARY OF INVENTION

### PROBLEMS TO BE SOLVED BY THE INVENTION

Furthermore, in recent years, when electric and electronic parts and a liquid crystal display are used for a long term, a problem becomes more severe that electronic parts inside the display deteriorate due to the moisture in the air, and propagation delay and/or transmission loss of electric signals become large. For this reason, a material having small water vapor permeability, that is a high water vapor-barrier property is required.

Additionally, a problem is that when a load such as an external stress and/or an internal stress has been continuously applied to a polyarylate resin, the polyarylate resin itself is deformed due to the viscous behavior possessed by the polyarylate resin, and when used as a coating or a laminate, peeling is generated. For this reason, in order that these deformation and peeling are not generated, a polyarylate resin having excellent deformation-resisting properties is required. More particularly, a polyarylate resin having the small viscous behavior, that is, a polyarylate resin of which the loss elasticity (E") as an index of the viscous behavior in dynamic viscoelasticity measurement exhibits a low value is required.

The polyarylate resin of Patent Literature 1 has a limitation of solubility properties in non-halogenated organic solvents, which have been more required in recent years, and further improvement in the solubility properties mentioned above is required. Additionally, the polyarylate resin of Patent Literature 1 has a problem in a water vapor-barrier property and deformation-resisting properties (such as adhesive properties).

The polyarylate resin of Patent Literatures 2 and 3 has a problem in heat-resisting properties, mechanical strength and liquid sag-resisting properties. For example, when a resin solution obtained from the polyarylate resin, which is inferior in liquid sag-resisting properties, is applied, liquid sagging is generated in some cases. Liquid sagging is a phenomenon that a coating film which remains in the solution state immediately after applying the resin solution on a substrate cannot retain a shape, and is deformed. When liquid sagging has been generated, a shape and a thickness of the coating film become unable to be controlled, and this causes a problem of the productivity. A problem of liquid sagging is generated not only when a coated surface of a substrate is arranged vertically or obliquely to a horizontal surface, but also when a coated surface of a substrate is arranged parallel to a horizontal surface. Particularly, when a problem of liquid sagging has been generated on a coated surface parallel to a horizontal surface, a coating film which has remained in the solution state immediately after applying the resin solution cannot also retain a shape at an end part thereof (edge part), and it is difficult to control a shape and a thickness of the coating film.

The present invention solves the above-mentioned problems, and an object thereof is to provide a polyarylate resin excellent in heat-resisting properties, abrasion-resisting properties, solubility properties in non-halogenated organic solvents, a water vapor-barrier property, mechanical strength, liquid sag-resisting properties, and deformation-resisting properties (such as adhesive properties).

### MEANS FOR SOLVING PROBLEMS

The present inventors intensively made study in order to solve such problems, and as a result, found out that by concurrently using a dihydric phenol residue shown in general formula (1), and an aromatic dicarboxylic acid residue shown in general formula (2), the above-mentioned object was attained, resulting in completion of the present invention.

That is, the subject matter of the present invention is as follows:
<1> A polyarylate resin comprising a dihydric phenol residue shown in general formula (1) and an aromatic dicarboxylic acid residue shown in general formula (2), 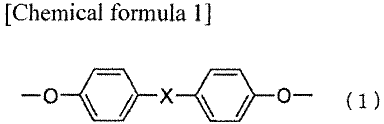 wherein X represents a linear or branched bivalent hydrocarbon group having 4 to 8 carbon atoms, 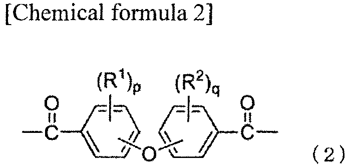 wherein R¹ and R² each independently represent a monovalent hydrocarbon group having 1 to 6 carbon atoms, which may be substituted with one or more halogen atoms, or a halogen atom, and p and q independently represent an integer of 0 to 4.
<2> The polyarylate resin of <1>, wherein a content of the dihydric phenol residue shown in general formula (1) is 5 to 100 mol% based on residues of all dihydric phenol components.
<3> The polyarylate resin of <1> or <2>, wherein a content of the aromatic dicarboxylic acid residue shown in general formula (2) is 50 to 100 mol% based on residues of all aromatic dicarboxylic acid components.
<4> The polyarylate resin of any one of <1> to <3>, further comprising a dihydric phenol residue shown in general formula (3), 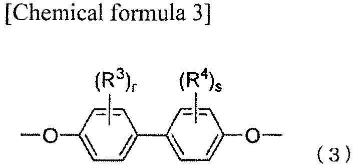 wherein R³ and R⁴ each independently represent a monovalent hydrocarbon group having 1 to 6 carbon atoms, which may be substituted with one or more halogens, or a halogen atom, and r and s each independently represent an integer of 0 to 4.
<5> The polyarylate resin of <4>, wherein a molar ratio of residues shown in general formula (1) and general formula (3) is 20/80 to 80/20, as expressed by [residue shown in general formula (1)]/[residue shown in general formula (3)].
<6> The polyarylate resin of <4> or <5>, wherein the dihydric phenol residue shown in general formula (3) is 3,3',5,5'-tetramethyl-4,4'-biphenol residue.
<7> The polyarylate resin of any one of <1> to <6>, wherein the dihydric phenol residue shown in general formula (1) is 2,2-bis(4-hydroxyphenyl)-4-methylpentane residue.
<8> The polyarylate resin of any one of <1> to <7>, wherein the aromatic dicarboxylic acid residue shown in general formula (2) is diphenyl ether-4,4'-dicarboxylic acid residue.
<9> The polyarylate resin of any one of <1> to <8>, further comprising a phthalic acid residue shown in general formula (4). 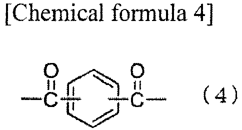
<10> The polyarylate resin of <9>, wherein a content of the phthalic acid residue shown in general formula (4) is 20 to 50 mol% based on all aromatic dicarboxylic acid components.
<11> A film comprising the polyarylate resin as defined in any one of <1> to <10>.
<12> A laminate comprising a layer of the polyarylate resin as defined in any one of <1> to <10> provided on a substrate.

### EFFECTS OF THE INVENTION

According to the present invention, there can be provided a polyarylate resin excellent in heat-resisting properties, abrasion-resisting properties, solubility properties in non-halogenated organic solvents, a water vapor-barrier property, mechanical strength, liquid sag-resisting properties, and deformation-resisting properties (such as adhesive properties). More particularly, the polyarylate resin of the present invention is excellent in a water vapor-barrier property, liquid sag-resisting properties, and deformation-resisting properties (such as adhesive properties) while sufficiently maintaining excellent heat-resisting properties, abrasion-resisting properties, solubility properties in non-halogenated organic solvents and mechanical strength.

### MODES FOR CARRYING OUT THE INVENTION

The polyarylate resin of the present invention is formed by one or more dihydric phenol residue and one or more aromatic dicarboxylic acid residue.

It is necessary that as the dihydric phenol residue, a residue shown in general formula (1) be contained. When the residue shown in general formula (1) is not contained, since solubility properties in non-halogenated organic solvents, a water vapor-barrier property, and deformation-resisting properties (such as adhesive properties) are deteriorated, this is not preferable. Additionally, heat-resisting properties are deteriorated in some cases. Deformation-resisting properties are the performance that when a load such as an external stress and/or an internal stress is continuously applied to the polyarylate resin itself, the polyarylate resin itself is hardly deformed. Deformation-resisting properties also include, for example, adhesive properties (peeling-resisting properties) of a coating or a laminate, when the polyarylate resin is used in a form of the coating or the laminate.

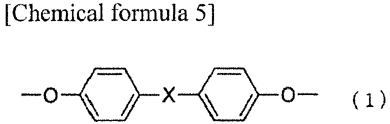

In the general formula (1), X represents a linear or branched bivalent hydrocarbon group having 4 to 8, preferably 4 to 7, more preferably 5 to 7 or 4 to 6 carbon atoms. When the carbon number of X is smaller than 4, a water vapor-barrier property and/or solubility properties in non-halogenated organic solvents are (is) deteriorated in some cases. When the carbon number of X is larger than 8, a high glass transition temperature is lowered in some cases. The term of "linear" means that when it is postulated that each of two chemical bonds of the bivalent hydrocarbon group has bound to a hydrogen atom, the carbon chain is linear in the chemical structural formula of the resulting hydrocarbon compound. The term of "branched" means that when it is postulated that each of two chemical bonds of the bivalent hydrocarbon group has bound to a hydrogen atom, the carbon chain is branched in the chemical structural formula of the resulting hydrocarbon compound. Examples of the bivalent hydrocarbon group include aliphatic hydrocarbon groups such as saturated aliphatic hydrocarbon group and an unsaturated aliphatic hydrocarbon group. Preferable X is a linear or branched bivalent saturated aliphatic hydrocarbon group, more preferably a branched bivalent saturated aliphatic hydrocarbon group. Specific examples of the linear bivalent saturated aliphatic hydrocarbon group include a linear alkylene group such as a tetramethylene group, a pentamethylene group, a hexamethylene group, a heptamethylene group, an octamethylene group, a 2,2-butylene group, a 2,2-pentylene group, a 2,2-hexylene group, a 2,2-heptylene group, a 2,2-octylene group, and a 3,3-pentylene group. Specific example of the branched bivalent saturated aliphatic hydrocarbon group include a branched alkylene group such as a 3-methyl-2,2-butylene group, a 4-methyl-2,2-pentylene group, a 2-ethyl-1,1-hexylene group, a 2-methyl-1,-propylene group, and a 3-methyl-1,1-butylene group.

Examples of the dihydric phenol which provides a residue shown in general formula (1) include 2,2-bis(4-hydroxyphenyl)butane, 2,2-bis(4-hydroxyphenyl)pentane, 2,2-bis(4-hydroxyphenyl)hexane, 2,2-bis(4-hydroxyphenyl)-3-methylbutane, 2,2-bis(4-hydroxyphenyl)-4-methylpentane, 1,1-bis(4-hydroxyphenyl)-2-ethylhexane, 2,2-bis(4-hydroxyphenyl)butane, 1,1-bis(4-hydroxyphenyl)-2-methylpropane, 2,2-bis(4-hydroxyphenyl)octane, 1,1-bis(4-hydroxyphenyl)-3-methylbutane, and 3,3-bis(4-hydroxyphenyl)pentane. Among them, from a viewpoint of a water vapor-barrier property, 2,2-bis(4-hydroxyphenyl)-4-methylpentane is preferable.

The content of the dihydric phenol which provides a residue shown in general formula (1) based on all dihydric phenol components is usually 5 to 100 mol%, preferably 10 to 100 mol%, more preferably 10 to 90 mol%. From a viewpoint of further improvement in heat-resisting properties, a water vapor-barrier property, solubility properties in non-halogenated organic solvents, mechanical strength, liquid sag-resisting properties, and deformation-resisting properties (such as adhesive properties), the content of the dihydric phenol which provides a residue shown in general formula (1) is preferably 20 to 80 mol%, more preferably 40 to 70 mol%, further preferably 40 to 65 mol%, most preferably 40 to 60 mol%, based on all dihydric phenol components. The content of the dihydric phenol which provides a residue shown in general formula (1) based on all dihydric phenol components is the content of a dihydric phenol residue shown in general formula (1) based on residues of all dihydric phenol components. Liquid sag-resisting properties are properties that even when a resin solution obtained from the polyarylate resin is applied, liquid sagging is hardly generated, and for example, properties that even when a resin solution is applied, the viscosity of the coated resin solution is hardly reduced.

In the present invention, it is preferable that as the dihydric phenol residue, further, a residue shown in general formula (3) is contained. By containing the residue shown in general formula (3) in addition to the residue shown in general formula (1), heat-resisting properties can be further improved. Additionally, when the present invention is used as a coating material such as a coating agent, from a viewpoint of suppression of liquid sagging, the long stabilized time of the viscosity is required. For this reason, the content of the dihydric phenol which provides a residue shown in general formula (3) based on all dihydric phenol components is, usually, preferably 20 to 80 mol%, more preferably 30 to 60 mol%, further preferably 35 to 60 mol%, most preferably 40 to 60 mol%.

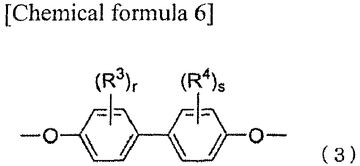

In general formula (3), R³ and R⁴ represent a substituent binding to a benzene ring, and each independently represent a monovalent hydrocarbon group having 1 to 6 carbon atoms, which may be substituted with one or more halogen atoms, or a halogen atom. One or more halogen atoms with which the monovalent hydrocarbon group may be substituted and a halogen atom as R³ and R⁴ may be each independently any halogen atom, and examples thereof include a fluorine atom, a chlorine atom or a bromine atom. Examples of the monovalent hydrocarbon group include a saturated aliphatic hydrocarbon group, an alicyclic hydrocarbon group and an aromatic hydrocarbon group, and in these groups, one or more hydrogen atoms may be substituted with a halogen atom. Examples of the saturated aliphatic hydrocarbon group include an alkyl group having 1 to 6, preferably 1 to 3 carbon atoms, or a halogenated alkyl group having 1 to 6, preferably 1 to 3 carbon atoms. Specific examples of the saturated aliphatic hydrocarbon group include an alkyl group such as a methyl group, an ethyl group, a propyl group, a butyl group, a pentyl group, and a hexyl group and halogenated alkyl groups thereof. Examples of the alicyclic hydrocarbon group include a cycloalkyl group having 3 to 6, preferably 4 to 6 carbon atoms (for example, cyclohexyl group) or a halogenated cycloalkyl group having 3 to 6, preferably 4 to 6 carbon atoms. Examples of the aromatic hydrocarbon group include a phenyl group or a halogenated phenyl group. Among them, a saturated aliphatic hydrocarbon group (particularly, methyl group, ethyl group), an aromatic hydrocarbon group (particularly, phenyl group), and an alicyclic hydrocarbon group (particularly, cyclohexyl group) are preferable, and a saturated aliphatic hydrocarbon group (particularly, methyl group) is more preferable, due to industrially easy availability and easy synthesizability.

In general formula (3), r and s represent the number of substituents binding to a benzene ring, and each independently represent an integer of 0 to 4. When r and s are 0, this represents that all hydrogen atoms binding to a benzene ring are not substituted with R³ and R⁴. When r is 2 to 4, a plurality of R³s may be the same substituent or different substituents from each other. When s is 2 to 4, a plurality of R⁴s may be the same substituent or different substituents from each other. Since solubility properties in non-halogenated solvents are excellent, it is preferable that r and s are each independently an integer of 1 to 4, particularly, 1 to 3.

Examples of the dihydric phenol which provides a residue shown in general formula (3) include 4,4'-biphenol, 3,3'-dimethyl-4,4'-biphenol, 3,3',5,5'-tetramethyl-4,4'-biphenol, 2,2',3,3',5,5'-hexamethyl-4,4'-biphenol, and 3,3',5,5'-tetra-*tert*-butyl-2,2'-biphenol. Among them, from a viewpoint of solubility properties in non-halogenated organic solvents, 3,3'-5,5'-tetramethyl-4,4'-biphenol is preferable.

When the dihydric phenol which provides a residue shown in general formula (1) and the dihydric phenol which provides a residue shown in general formula (3) are used concurrently, a molar ratio of the dihydric phenol which provides a residue shown in general formula (1) and the dihydric phenol which provides a residue shown in general formula (3) is preferably [dihydric phenol which provides a residue shown in general formula (1)]/[dihydric phenol which provides a residue shown in general formula (3)] = 10/90 to 90/10, and from a viewpoint of further improvement in heat-resisting properties, solubility properties in non-halogenated organic solvents, a water vapor-barrier property, mechanical strength, liquid sag-resisting properties, and deformation-resisting properties (such as adhesive properties), is preferably 20/80 to 80/20, more preferably 40/60 to 70/30, further preferably 40/60 to 65/35, more preferably 40/60 to 60/40. Additionally, a total of the contents of the dihydric phenol which provides a residue shown in general formula (1) and the dihydric phenol which provides a residue shown in general formula (3) based on all dihydric phenol components is preferably 90 mol% or more, more preferably 95% or more, further preferably 100 mol%, from a viewpoint of further improvement in heat-resisting properties, solubility properties in non-halogenated organic solvents, a water vapor-barrier property, mechanical strength, liquid sag-resisting properties, and deformation-resisting properties (such as adhesive properties). A molar ratio of the dihydric phenol which provides a residue shown in general formula (1) and the dihydric phenol which provides a residue shown in general formula (3) is a molar ratio of a residue shown in general formula (1) and a residue shown in general formula (3), and is represented by [residue shown in general formula (1)]/[residue shown in general formula (3)].

As the dihydric phenol residue, another dihydric phenol residue other than the residue shown in general formula (1) and the residue shown in general formula (3) may be contained in a range that the effect of the present invention is not deteriorated. Examples of the dihydric phenol which provides another dihydric phenol residue include 1,1-bis(4-hydroxyphenyl)methane, 1,1-bis(4-hydroxyphenyl)ethane, 1,1-bis(2-hydroxy-4-methyl phenyl)methane, 1,1-bis(4-hydroxy-3,5-dimethylphenyl)methane, 1,1-bis(4-hydroxyphenyl)cyclohexane, 2,2-bis(4-hydroxyphenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, 2,2-bis(4-hydroxy-3-phenylphenyl)propane, 1,1-bis(4-hydroxy-3-methylphenyl)methane, 1,1-bis(4-hydroxyphenyl)-1-phenylmethane, 1,1-bis(4-hydroxy-3-methylphenyl)cyclohexane, 2,2-bis(3 -allyl-4-hydroxyphenyl)propane, 2,2-bis(4-hydroxy-3-isopropylphenyl)propane, 2,2-bis(3-*tert*-butyl-4-hydroxyphenyl)propane, 2,2-bis(3-*sec*-butyl-4-hydroxyphenyl)propane, bisphenolfluorene, 1,1-bis(5-*tert*-butyl-4-hydroxy-2-methyl-phenyl)-2-methylpropane, 4,4'-[1,4-phenylene-bis(2-propylidene)-bis(4-hydroxy-3-methylphenyl)], 1,1-bis(4-hydroxy-3-phenylphenyl)cyclohexane, 4,4'-dihydroxyphenyl ether, bis(2-hydroxyphenyl)methane, 2,4'-methylenebisphenol, bis(4-hydroxy-3-methylphenyl)methane, bis(4-hydroxyphenyl)propane, 1,1-bis(2-hydroxy-5-methylphenyl)ethane, bis(2-hydroxy-3,5-dimethylphenyl)methane, 1,1-bis(4-hydroxyphenyl)cyclopentane, 1,1-bis(4-hydroxy-3-methylphenyl)cyclopentane, 3,3 -bis(4-hydroxy-3 -methylphenyl)pentane, 3,3 -bis(4-hydroxy-3,5 -dimethylphenyl)pentane, 2,2-bis(2-hydroxy-3,5-dimethylphenyl)propane, 2,2-bis(4-hydroxyphenyl)nonane, 1,1-bis(4-hydroxy-3-methylphenyl)-1-phenylethane. 1,1-bis(4-hydroxy-3,5-dimethylphenyl)cyclohexane, 2,2-bis(4-hydroxyphenyl)decane, 1,1-bis(4-hydroxyphenyl)decane, bis(3-*tert*-butyl-2-hydroxy-5-methylphenyl)methane, bis(4-hydroxyphenyl)diphenylmethane, terpenediphenol, 1,1-bis(3-*tert*-butyl-4-hydroxyphenyl)cyclohexane, 1,1-bis(5-*tert*-butyl-4-hydroxy-2-methyl-phenyl)-2-methylpropane, 2,2-bis(3-cyclohexyl-4-hydroxyphenyl)propane, 1,1-bis(3,5-di-*tert*-butyl-4-hydroxyphenyl)methane, 1,1-bis(3,5-di-*sec*-butyl-4-hydroxyphenyl)methane, 1,1-bis(3-cyclohexyl-4-hydroxyphenyl)cyclohexane, 1,1-bis(3,5-di-*tert*-butyl-2-hydroxyphenyl)ethane, bis(4-hydroxy-3-nonyl-phenyl)methane, 2,2-bis(3,5-di-*tert*-butyl-4-hydroxyphenyl)propane, bis(3,5-di-*tert*-butyl-2-hydroxy-6-methylphenyl)methane, 1,1-bis(4-hydroxy-3-phenylphenyl)-1-phenylethane, bis(3-fluoro-4-hydroxyphenyl)methane, bis(5-fluoro-2-hydroxyphenyl)methane, 2,2-bis(4-hydroxyphenyl)-1,1,1,3,3,3-hexafluoropropane, 2,2-bis(3-fluoro-4-hydroxyphenyl)propane, bis(3-fluoro-4-hydroxyphenyl)phenylmethane, bis(3-fluoro-4-hydroxyphenyl)-(4-fluorophenyl)methane, bis(4-hydroxyphenyl)-(4-fluorophenyl)methane, 2,2-bis(3-chloro-4-hydroxy-5-methylphenyl)propane, 2,2-bis(3,5-dichloro-4-hydroxyphenyl)propane, 2,2-bis(3-chloro-4-hydroxyphenyl)propane, 1,1-bis(3,5-dibromo-4-hydroxyphenyl)methane, 2,2-bis(3,5-dibromo-4-hydroxyphenyl)propane, 2,2-bis(4-hydroxy-3-nitrophenyl)propane, bis(4-hydroxyphenyl)dimethylsilane, bis(4-hydroxy-3-methylphenyl)ether, bis(4-hydroxy-3,5-dimethylphenyl)ether, bis(4-hydroxy-2,3,5-trimethylphenyl)phenylmethane, 2,2-bis(4-hydroxyphenyl)dodecane, 2,2-bis(4-hydroxy-3-methylphenyl)dodecane, 2,2-bis(4-hydroxy-3,5-dimethyl-phenyl)dodecane, 1,1-bis(3-*tert*-butyl-4-hydroxyphenyl)-1-phenylethane, 1,1-bis(3,5-di-*tert*-butyl-4-hydroxyphenyl)-1-phenylethane 1,1-bis(5-cyclohexyl-4-hydroxy-2-methylphenyl)-2-methylpropane, 1,1-bis(3,5-di-*tert*-butyl-2-hydroxyphenyl)ethane, isatinbisphenol, isatinbiscresol, bis(2-hydroxyphenyl)methane, 2,4'-methylenebisphenol, 1,2-bis(4-hydroxyphenyl)ethane, 2-(4-hydroxyphenyl)-2-(2-hydroxyphenyl)propane, bis(3-allyl -2-hydroxyphenyl)methane, 1,1-bis(2-hydroxy-3,5-dimethylphenyl)-2-methylpropane, 1,1-bis(5-*tert*-butyl-2-hydroxyphenyl)ethane, bis(2-hydroxy-5-phenylphenyl)methane, 1,1-bis(5-*tert*-butyl-4-hydroxy-2-methylphenyl)butane, bis(5-cyclohexyl-4-hydroxy-2-methyl-phenyl)methane, 2,2-bis(4-hydroxyphenyl)pentadecane, 2,2-bis(4-hydroxy-3-methylphenyl)pentadecane, 2,2-bis(4-hydroxy-3,5-dimethylphenyl)pentadecane, 1,2-bis(3,5-di-*tert*-butyl-4-hydroxyphenyl)ethane, bis(3,5-di-*tert*-butyl-2-hydroxyphenyl)methane, 2,2-bis(4-hydroxy-3-styrylphenyl)propane, 1,1-bis(4-hydroxyphenyl)-1-(4-nitrophenyl)ethane, bis(3,5-difluoro-4-hydroxyphenyl)methane, bis(3,5-difluoro-4-hydroxyphenyl)phenylmethane, bis(3,5-difluoro-4-hydroxyphenyl)diphenylmethane, bis(3-fluoro-4-hydroxyphenyl)diphenylmethane, 2,2-bis(3-chloro-4-hydroxyphenyl)propane, 1,1-bis(4-hydroxyphenyl)-3,3,5-trimethyl-cyclohexane, 1,1-bis(4-hydroxyphenyl)-3,3,5,5-tetramethylcyclohexane, 1,1-bis(4-hydroxyphenyl)-3,3,4-trimethylcyclohexane, 1,1-bis(4-hydroxyphenyl)-5-ethyl-3,3-dimethylcyclohexane, 1,1-bis(4-hydroxyphenyl)-3,3,5-trimethylcyclopentane, 1,1-bis(4-hydroxy-3,5-dimethylphenyl)-3,3,5-trimethylcyclohexane, 1,1-bis(4-hydroxy-3,5-diphenylphenyl)-3,3,5-trimethylcyclohexane, 1,1-bis(4-hydroxy-3-methylphenyl)-3,3,5-trimethylcyclohexane, 1,1-bis(4-hydroxy-3-phenylphenyl)-3,3,5-trimethylcyclohexane, 1,1-bis(3,5-dichloro-4-hydroxyphenyl)-3,3,5-trimethylcyclohexane, 9,9-bis(4-hydroxyphenyl)fluorene, 9,9-bis(4-hydroxy-3-methylphenyl)fluorene, 1,1-bis(3,5-dibromo-4-hydroxyphenyl)-3,3,5-trimethylcyclohexane, bis(4-hydroxyphenyl)sulfone, bis(2-hydroxyphenyl)sulfone, bis(4-hydroxy-3,5-dimethylphenyl)sulfone, bis(3,5-diethyl-4-hydroxyphenyl)sulfone, bis(4-hydroxy-3-methylphenyl)sulfone, bis(3-ethyl-4-hydroxyphenyl)sulfone, bis(4-hydroxyphenyl)sulfide, bis(4-hydroxy-3,5-dimethylphenyl)sulfide, bis(3,5-diethyl-4-hydroxyphenyl)sulfide, bis(4-hydroxy-3-methyl-phenyl)sulfide, bis(3-ethyl-4-hydroxyphenyl)sulfide, 2,4'-dihydroxydiphenylsulfone, 1,4-dihydroxybenzene, 1,3-dihydroxybenzene, and 1,2-dihydroxybenzene. When another dihydric phenol is contained, the content thereof is preferably less than 10 mol%, more preferably 5 mol% or less, further preferably substantially 0 mol%, from a viewpoint of solubility properties in non-halogenated organic solvents, heat-resisting properties, a water vapor-barrier property, and deformation-resisting properties (such as adhesive properties).

It is necessary that, as the aromatic dicarboxylic acid residue, a residue shown in general formula (2) be contained. When the residue shown in general formula (2) is not contained, solubility properties in non-halogenated organic solvents, heat-resisting properties, abrasion-resisting properties, mechanical strength and liquid sag-resisting properties, particularly, heat-resisting properties, abrasion-resisting properties, mechanical strength and liquid sag-resisting properties are deteriorated, and accordingly, this is not preferable.

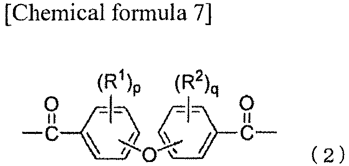

The content of the aromatic dicarboxylic acid which provides a residue shown in general formula (2) based on all aromatic dicarboxylic acid components is usually 10 to 100 mol%, and from a viewpoint of further improvement in abrasion-resisting properties, is preferably 50 to 100 mol%, more preferably 60 to 100 mol%, further preferably 70 to 100 mol%, more preferably 90 to 100 mol%. The content of the aromatic dicarboxylic acid which provides a residue shown in general formula (2) is preferably 50 to 80 mol%, more preferably 60 to 80 mol%, further preferably 60 to 75 mol%, based on all aromatic dicarboxylic acid components, from a viewpoint of the balance between securement of abrasion-resisting properties, and further improvement in heat-resisting properties, liquid sag-resisting properties and/or mechanical strength. The content of the aromatic dicarboxylic acid which provides a residue shown in general formula (2) based on all aromatic dicarboxylic acid components is the content of an aromatic dicarboxylic acid residue shown in general formula (2) based on residues of all aromatic dicarboxylic acid components.

In general formula (2), R¹ and R² represent a substituent binding to a benzene ring, and each independently represent a monovalent hydrocarbon group having 1 to 6 carbon atoms, which may be substituted with one or more halogen atoms, or a halogen atom. One or more halogen atoms with which the monovalent hydrocarbon group may be substituted and a halogen atom as R¹ and R² are each independently any halogen atom, and examples thereof include a fluorine atom, a chlorine atom or a bromine atom. Examples of the monovalent hydrocarbon group include a saturated aliphatic hydrocarbon group, an alicyclic hydrocarbon group and an aromatic hydrocarbon group, and one or more hydrogen atoms of these groups may be substituted with a halogen atom. Examples of the saturated aliphatic hydrocarbon group include an alkyl group having 1 to 6, preferably 1 to 3 carbon atoms, or a halogenated alkyl group having 1 to 6, preferably 1 to 3 carbon atoms. Specific examples of the saturated aliphatic hydrocarbon group include an alkyl group such as a methyl group, an ethyl group, a propyl group, a butyl group, a pentyl group, and a hexyl group, and halogenated alkyl groups thereof. Examples of the alicyclic hydrocarbon group include a cycloalkyl group (for example, cyclohexyl group) having 3 to 6, preferably 4 to 6 carbon atoms, or a halogenated cycloalkyl group having 3 to 6, preferably 4 to 6 carbon atoms. Examples of the aromatic hydrocarbon group include a phenyl group or a halogenated phenyl group. Among them, a saturated aliphatic hydrocarbon group (particularly, methyl group, ethyl group), an aromatic hydrocarbon group (particularly, phenyl group), and an alicyclic hydrocarbon group (particularly, cyclohexyl group) are preferable, and a saturated aliphatic hydrocarbon group (particularly, methyl group) is more preferable, due to industrially easy availability and easy synthesizability.

In general formula (2), p and q represent the number of substituents binding to a benzene ring, and each independently represent an integer of 0 to 4. When p and q are 0, this represents that all hydrogen atoms binding to a benzene ring are not substituted with R¹ and R². When p is 2 to 4, a plurality of R¹s may be the same substituent, or different substituents from each other. When q is 2 to 4, a plurality of R²s may be the same substituent, or different substituents from each other. From a viewpoint of further improvement in heat-resisting properties, abrasion-resisting properties, a water vapor-barrier property, mechanical strength, liquid sag-resisting properties, and deformation-resisting properties (such as adhesive properties), and solubility properties in non-halogenated organic solvents, it is preferable that p and q are each independently 0 or 1, particularly 0 at the same time.

Examples of the aromatic dicarboxylic acid which provides a residue shown in general formula (2) include diphenyl ether-2,2'-dicarboxylic acid, diphenyl ether -2,3'-dicarboxylic acid, diphenyl ether-2,4'-dicarboxylic acid, diphenyl ether-3,3'-dicarboxylic acid, diphenyl ether-3,4'-dicarboxylic acid, and diphenyl ether-4,4'-dicarboxylic acid. Among them, diphenyl ether-4,4'-dicarboxylic acid is preferable due to industrially easy availability.

In the present invention, as the aromatic dicarboxylic acid residue, a phthalic acid residue shown in general formula (4) may be further contained. By containing the phthalic acid residue shown in general formula (4) in addition to the residue shown in general formula (2), heat-resisting properties and mechanical strength can be further improved. Examples of a compound which provides the phthalic acid residue shown in general formula (4) include terephthalic acid, isophthalic acid, and *ortho*-phthalic acid.

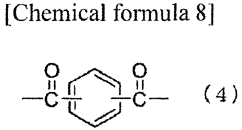

The content of the phthalic acid residue shown in general formula (4) is usually 50 mol% or less, and from a viewpoint of abrasion-resisting properties, is preferably 40 mol% or less, more preferably 35 mol% or less, further preferably 30 mol% or less, most preferably 25 mol% or less, based on all aromatic dicarboxylic acid components (that is, all residues derived from all aromatic dicarboxylic acid components). The content of the phthalic acid residue shown in general formula (4) is preferably 10 mol% or more, more preferably 20 mol% or more, further preferably 25 mol% or more, based on all aromatic dicarboxylic acid components, from a viewpoint of further improvement in heat-resisting properties, solubility properties in non-halogenated organic solvents, a water vapor-barrier property, liquid sag-resisting properties, deformation-resisting properties (such as adhesive properties) and/or mechanical strength. From a viewpoint of the balance between securement of abrasion-resisting properties, and further improvement in heat-resisting properties, solubility properties in non-halogenated organic solvents, a water vapor-barrier property, liquid sag-resisting properties, deformation-resisting properties (such as adhesive properties) and/or mechanical strength, the content of the phthalic acid residue shown in general formula (4) is preferably 20 to 50 mol%, more preferably 20 to 40 mol%, further preferably 25 to 40 mol%, based on all aromatic dicarboxylic acid components.

In the present invention, the aromatic dicarboxylic acid residue may contain a residue of another aromatic dicarboxylic acid other than the aromatic dicarboxylic acid which provides the residue of general formula (2) and the aromatic dicarboxylic acid which provides the residue of general formula (4), in a range that the effect of the present invention is not deteriorated. Examples of the aromatic dicarboxylic acid which provides such a residue include phthalic acid derivatives such as terephthalic acid, isophthalic acid, and *ortho*-phthalic acid; biphenyldicarboxylic acids such as 4,4'-biphenyldicarboxylic acid, and 2,2'-biphenyldicarboxylic acid, and derivatives thereof; and naphthalenedicarboxylic acids such as 1,5-naphthalenedicarboxylic acid and 2,6-naphthalenedicarboxylic acid, and derivatives thereof. The derivative is a compound in which in the aromatic dicarboxylic acid, one or more hydrogen atoms binding to a benzene ring is substituted with an alkyl group such as a methyl group, an ethyl group, a *n*-propyl group, an isopropyl group, a n-butyl group, an isobutyl group, a see-butyl group and a *tert*-butyl group. When another aromatic dicarboxylic acid is contained, the content thereof is preferably less than 10 mol%, and more preferably substantially 0 mol%, in all aromatic dicarboxylic acid components.

The polyarylate resin of the present invention may contain residues of other components such as an aliphatic diol, an alicyclic diol, an aliphatic dicarboxylic acid, and an alicyclic dicarboxylic acid, in addition to the dihydric phenol residue and the aromatic dicarboxylic acid residue, in a range that the effect of the present invention is not deteriorated. Examples of the aliphatic diol include ethylene glycol and propylene glycol. Examples of the alicyclic diol include 1,4-cyclohexanediol, 1,3-cyclohexanediol, and 1,2-cyclohexanediol. Examples of the aliphatic dicarboxylic acid include adipic acid and sebacic acid. Examples of the alicyclic dicarboxylic acid include 1,4-cyclohexanedicarboxylic acid, 1,3-cyclohexanedicarboxylic acid, and 1,2-cyclohexanedicarboxylic acid. The content of residues of other components is preferably less than 10 mol%, more preferably substantially 0 mol%, based on the total molar number of a raw material monomer.

A weight average molecular weight of the polyarylate resin of the present invention is preferably 60,000 to 150,000, from a viewpoint of heat-resisting properties, mechanical strength, and processibility. When a weight average molecular weight is less than 60,000, a glass transition temperature and/or mechanical strength are (is) reduced in some cases. On the other hand, when a weight average molecular weight exceeds 150,000, the solution viscosity when dissolved in a non-halogenated organic solvent and/or the melt viscosity are (is) too high, and processibility is deteriorated in some cases.

A glass transition temperature of the polyarylate resin of the present invention is preferably 200 °C or higher, more preferably 215 °C or higher, most preferably 230 °C or higher. When the polyarylate resin is used in a liquid crystal display etc., it is usual that the polyarylate resin is applied on a liquid crystal display, an indium-tin oxide (ITO) solution is applied thereon, and thereafter, this is crystallized at a temperature of 200 °C or higher. By adjusting a glass transition temperature of the polyarylate resin at 200 °C or higher, ITO can easily be crystallized.

From a viewpoint of heat stability at the time of processing, a thermal decomposition temperature of the polyarylate resin of the present invention is preferably 370 °C or higher, more preferably 380 °C or higher, most preferably 390 °C or higher, as expressed by a 10% mass decrease temperature.

The polyarylate resin of the present invention is excellent in solubility properties in non-halogenated organic solvents. Examples of the non-halogenated organic solvents include an aromatic compound such as toluene, xylene and benzene; a cyclic ether compound such as tetrahydrofuran, 1,4-dioxane, and 1,3-dioxolane; and a cyclic ketone compound such as cyclohexanone and cyclopentanone. Among them, the aromatic compound (particularly, xylene), and the cyclic ketone compound (particularly, cyclohexanone) are preferable.

Examples of a method of producing the polyarylate resin of the present invention include methods of performing a reaction using one or more organic solvents such as an interfacial polymerization method and a solution polymerization method, or methods of performing a reaction in the melted state such as melt polymerization. From a viewpoint of polymerizability and/or appearance of the resulting resin, it is preferable to use methods performing a reaction using one or more organic solvents, particularly, an interfacial polymerization by which a reaction at a low temperature is possible.

Examples of the interfacial polymerization method include a method of mixing a solution (organic phase) in which dicarboxylic acid halide is dissolved in an organic solvent not compatible with water, into an aqueous alkaline solution (aqueous phase) containing dihydric phenol, a terminal blocking agent, an antioxidant and a polymerization catalyst, and performing a polymerization reaction while stirring the mixture at a temperature of 50 °C or lower for 1 to 8 hours.

As a solvent used in an organic phase, a solvent which is not compatible with water and dissolves the resulting polyarylate resin is preferable. Examples of such solvents include methylene chloride and chloroform, and methylene chloride is preferable due to easy usability in manufacturing.

Examples of the aqueous alkaline solutions used in an aqueous phase include aqueous solutions of sodium hydroxide, potassium hydroxide and a mixture thereof.

The terminal blocking agent is used from a viewpoint of adjustment of the molecular weight of the polyarylate resin and improvement in heat stability. Examples of the terminal blocking agent include monohydric phenol, monovalent acid chloride, monohydric alcohol, and monovalent carboxylic acid. Examples of the monohydric phenol include phenol, *o*-cresol, *m*-cresol, *p*-cresol, *p*-*tert*-butylphenol, *o*-phenylphenol, *m*-phenylphenol, *p*-phenylphenol, *o*-methoxyphenol, *m*-methoxyphenol, *p*-methoxyphenol, 2,3,6-trimethylphenol, 2,3-xylenol, 2,4-xylenol, 2,5-xylenol, 2,6-xylenol, 3,4-xylenol, 3,5-xylenol, 2-phenyl-2-(4-hydoroxypheny)propane, 2-phenyl-2-(2-hydroxyphenl)propane, and 2-phenyl-2-(3-hydroxyphenyl)propane. Examples of the monovalent acid chloride include benzoyl chloride, benzoic acid chloride, methanesulfonyl chloride, and phenyl chloroformate. Examples of the monohydric alcohol include methanol, ethanol, *n*-propanol, isopropanol, *n*-butanol, 2-butanol, pentanol, hexanol, dodecyl alcohol, stearyl alcohol, benzyl alcohol, and phenethyl alcohol. Examples of the monovalent carboxylic acid include acetic acid, propionic acid, octanoic acid, cyclohexanecarboxylic acid, benzoic acid, toluic acid, phenylacetic acid, *p*-*tert*-butylbenzoic acid, and *p*-methoxyphenylacetic acid. Among them, monohydric phenol (particularly, *p*-*tert*-butylphenol) is preferable due to high heat stability.

The antioxidant is used in order to prevent oxidation of the dihydric phenol component. Examples of the antioxidant include sodium hydrosulfite, L-ascorbic acid, erythorbic acid, catechin, tocopherol, and butylhydroxyanisole. Among them, sodium hydrosulfide is preferable due to excellent water solubility.

Examples of the polymerization catalyst include quaternary ammonium salts such as tri-*n*-butylbenzylammonium halide, tetra-*n*-butylammonium halide, trimethylbenzylammonium halide, and triethylbenzylammonium halide; and quaternary phosphonium salts such as tri-*n*-butylbenzylphosphonium halide, tetra-*n*-butylphosphonium halide, trimethylbenzylphosphonium halide, and triethylbenzylphosphonium halide. Inter alia, since a polymer having a high molecular weight and a low acid value can be obtained, tri-*n*-butylbenzylammonium halide, trimethylbenzylammonium halide, tetra-*n*-butylammonium halide, tri-*n*-butylbenzylphosphonium halide, and tetra-*n*-butylphosphonium halide are preferable.

By dissolving the polyarylate resin of the present invention in an organic solvent, thereafter, applying the solution on a substrate, and drying the coated substrate, or by extruding a melted resin of the polyarylate resin of the present invention on a substrate, a laminate in which a layer of the polyarylate resin is provided on the substrate can be obtained. Additionally, by peeling a resin layer from the laminate, a film can be obtained. In order to obtain a colorless transparent film, since deterioration in a color tone due to thermal decomposition is not generated, it is preferable that a film is obtained by dissolving the polyarylate resin in an organic solvent, applying the solution on the substrate, drying the coated substrate, and peeling a resin layer.

Examples of the organic solvent which dissolves the polyarylate resin include methylene chloride, 1,2-dichloroethane, chloroform, carbon tetrachloride, chlorobenzene, 1,1,2,2-tetrachloroethane, 1,1,1-trichloroethane, *o*-dichlorobenzene, *m*-dichlorobenzene, and *p*-dichlorobenzene, in addition to the above-mentioned non-halogenated organic solvent.

Examples of the substrate include a PET film, a polyimide film, a glass plate, and a stainless plate. Examples of a coating method include a wire bar coater coating method, a film applicator coating method, a brush coating method, a spray coating method, a gravure roll coating method, a screen printing method, a reverse roll coating method, a lip coating method, an air knife coating method, a curtain flow coating method, and an immersion coating method.

The tensile breaking strength of a film obtained from the polyarylate resin of the present invention is preferably 70 MPa or more, more preferably 80 MPa or more, more preferably 90 MPa or more, from a viewpoint of mechanical strength. The tensile breaking elongation of a film is preferably 60% or more, more preferably 65% or more, further preferably 70% or more, from a viewpoint of toughness.

The water vapor permeability coefficient of a film obtained from the polyarylate resin of the present invention is preferably 0.80 g•cm/(m²•day) or less, more preferably 0.70 g•cm/(m²•day) or less, more preferably 0.65 g•cm/(m²•day) or less.

The loss elasticity (E") (in the case of frequency of 1 Hz) of a film obtained from the polyarylate resin of the present invention is preferably 0.20 GPa or less, more preferably 0.15 GPa or less, more preferably 0.12 GPa or less. By adjusting the loss elasticity at 0.20 GPa or less, even in the state where there is a load, it is possible to make the film less plastically deformable.

The polyarylate resin of the present invention, as well as a film and a laminate obtained therefrom are excellent in heat-resisting properties, solubility properties in non-halogenated organic solvents, a water vapor-barrier property, mechanical strength, liquid sag-resisting properties, and deformation-resisting properties (such as adhesive properties). For these reasons, they can be suitably used in the electric and electronic material fields, as a substrate film of a liquid crystal display, a film condenser, illumination, a solar battery, a printed circuit etc.

In particular, the polyarylate resin of the present invention is excellent in liquid sag-resisting properties. More particularly, as a criterion of suppression of liquid sagging, a viscosity stabilization time when the solution viscosity is measured becomes an index. Generally, when a resin solution is measured using a viscometer, the viscosity is reduced with the lapse of time, and after a certain time, the viscosity is stabilized. In the present invention, the viscosity stabilization time refers to the time until the viscosity is stabilized, the time being the time until the viscosity becomes unchanged relative to the time. Herein, the longer viscosity stabilization time suggests that a solution hardly flows by shearing. For this reason, a coating film which is in the solution state immediately after coating is hardly influenced by the force received from the outside, and becomes easy to retain a shape. From a viewpoint of suppression of liquid sagging, the viscosity stabilization time when the solution viscosity is measured is preferably 10 minutes or longer, more preferably 15 minutes or longer, further preferably 20 minutes or longer.

### EXAMPLES

Then, the present invention will be specifically illustrated below by way of examples and comparative examples, but the present invention is not limited by them. In addition, measurement of the physical properties of the polyarylate resin was performed by the following methods.

### (1) Resin composition

Using a high resolution nuclear magnetic resonance apparatus (LA-400 NMR made by JOEL Ltd.), ¹H-NMR analysis was performed, thereby, the resin composition was determined from the peak intensity of each copolymerization component (resolution: 400 MHz, solvent: mixed solvent in which a volumetric ratio of deuterated trifluoroacetic acid and deuterated tetrachloroethane is 1/11, temperature: 50 °C).

### (2) Number average molecular weight (Mn) and weight average molecular weight (Mw)

Using gel permeation chromatography (GPC), the number average molecular weight and the weight average molecular weight in terms of polystyrene conversion were measured under the following conditions:
Liquid feeding device: Isocratic HPLC Pump 1515 made by Waters Corporation
Detector: Refractive Index Detector 2414 made by Waters Corporation
Column: Mixed-D (filled silica gel particle diameter 5 µm, tube length 300 mm, internal diameter 7.5 mm)
Solvent: Chloroform
Flow rate: 1 mL/min.
Measurement temperature: 35 °C

### (3) Glass transition temperature (Tg) (heat-resisting properties)

Using 10 mg of the polyarylate resin as a sample, and employing a DSC (differential scanning calorimetry) apparatus (DSC7 made by PerkinElmer, Inc.), a temperature was raised under the condition of a temperature raising rate of 10 °C/min., and an intermediate value between two refraction point temperatures derived from a glass transition in a temperature raising curve was defined as glass transition temperature.
⊙: 230°C or higher (best)
○: 215°C or higher and lower than 230°C (good)
Δ: 200°C or higher and lower than 215°C (no practical problem)
×: Lower than 200°C (practical problem)

### (4) Thermal decomposition temperature

The polyarylate resin was measured under the following conditions, and a temperature at which 10% by mass was decreased was defined as thermal decomposition temperature.
Apparatus: TG/DTA 7200 made by Hitachi High-Tech Science Corporation
Temperature raising rate: 10 °C/min.
Inflow gas: Air, flow rate 200 mL/min.
⊙: 390°C or higher (best)
○: 380°C or higher and lower than 390°C (good)
Δ: 370°C or higher and lower than 380°C (no practical problem)
×: Lower than 370°C (practical problem)

### (5) Water vapor permeability coefficient

To 10 parts by mass of the polyarylate resin was added 90 parts by mass of chloroform to obtain a resin solution. Using the resulting resin solution, a coating film was formed on a PET film. After the coating film was air-dried at room temperature, the dried coating film was peeled from the PET film, and dried at 150 °C for 24 hours under reduced pressure to prepare a film having the thickness of 100 µm. Using the resulting film, the water vapor permeability coefficient was measured under the following conditions:
Test apparatus: Water vapor permeability coefficient measuring apparatus made by MOCON Inc.
Temperature: 23.0 °C
Humidity: 80.0%
Measurement time: 24 hours
⊙: 0.65 g•cm/(m²•day) or less (best)
○: More than 0.65 g•cm/(m²•day) and 0.70 g•cm/(m²•day) or less (good)
Δ: More than 0.70 g•cm/(m²•day) and 0.80 g•cm/(m²•day) or less (no practical problem)
×: More than 0.80 g•cm/(m²•day) (practical problem)

### (6) Tensile breaking strength and tensile breaking elongation

Using the film obtained in (5), tensile breaking strength and tensile breaking elongation were measured under the following conditions in accordance with JIS K7127.
Test apparatus: Model 2020 made by INTESCO co., ltd.
Tension rate: 50 mm/min.
Test environment: 23 °C, 60% RH

### • Tensile breaking strength

⊙: 90 MPa or more (best)
○: 80 MPa or more and less than 90 MPa (good)
Δ: 70 MPa or more and less than 80 MPa (no practical problem)
×: Less than 70 MPa (practical problem)

### • Tensile breaking elongation

⊙: 70% or more (best)
○: 65% or more and less than 70% (good)
Δ: 60% or more and less than 65% (no practical problem)
×: Less than 60% (practical problem)

### (7) Loss elasticity (E")

Using the film obtained in (5), measurement was performed under the following conditions, and a value at the frequency of 1 Hz was defined as loss elasticity (E"). As the loss elasticity (E") is smaller, the film is more excellent in deformation-resisting properties (such as adhesive properties).
Test apparatus: Viscoelasticity analyzer RSAII made by Rheometric Scientific Inc.
Frequency: 0.159 to 15.9 Hz
Temperature: 25.0°C
Strain: 0.20%
⊙: 0.12 GPa or less (best)
○: More than 0.12 GPa and 0.15 GPa or less (good)
Δ: More than 0.15 GPa and 0.20 GPa or less (no practical problem)
×: More than 0.20 GPa (practical problem)

### (8) Solubility

To 15 parts by mass of the polyarylate resin was added 85 parts by mass of xylene or cyclohexanone, and the mixture was stirred at room temperature using a wave rotor. The state of the resin solution after one day was assessed based on the following criteria:
⊙: The resin solution had flowability, and was transparent (best).
○: The resin solution had flowability, but was slightly clouded (good).
Δ: The resin solution had flowability, and was clouded, but was not practically problematic.
×: The resin solution had no flowability, or the resin was entirely undissolved (practical problem).

### (9) Viscosity stabilization time

To 10 parts by mass of the polyarylate resin was added 90 parts by mass of *N*-methylpyrrolidone to obtain a resin solution. Using the resulting resin solution, the viscosity was measured at a temperature of 25.0 °C using a digital viscometer (VISCOMETR TVB-10), a HM-1 type rotor and a HM/H2 small amount sample adaptor made by TOKI SANGYO CO., LTD., the time from measurement initiation to stabilization of the viscosity was measured.
⊙: 20 minutes or longer (best)
○: 15 minutes or longer and shorter than 20 minutes (good)
Δ: 10 minutes or longer and shorter than 15 minutes (no practical problem)
×: Shorter than 10 minutes (practical problem).

### Example 1

Into a reactor equipped with a stirring device were placed 100.00 parts by mass of 2,2-bis(4-hydroxyphenyl)-4-methylpentane (BisMIBK) as a dihydric phenol component, 1.61 parts by mass of *p*-*tert*-butylphenol (PTBP) as a terminal blocking agent, 31.51 parts by mass of sodium hydroxide (NaOH) as an alkali, 1.57 parts by mass of a 50 mass% aqueous solution of tri-*n*-butylbenzylammonium chloride (TBBAC) as a polymerization catalyst, and 0.51 part by mass of sodium hydrosulfite as an antioxidant to dissolve them in 3100 parts by mass of water (aqueous phase). Separately, 110.72 parts by mass of diphenyl ether-4,4'-dicarboxylic acid chloride (DEDC) was dissolved in 2400 parts by mass of methylene chloride (organic phase) (BisMIBK: PTBP: DEDC: TBBAC: NaOH = 100.00: 2.90: 101.45: 0.42: 213.05 (molar ratio)). The aqueous phase was stirred in advance, the organic phase was added into the aqueous phase under vigorous stirring, and polymerization was performed at 15 °C for 2 hours by an interfacial polymerization method. Thereafter, stirring was stopped, and the aqueous phase and the organic phase were separated by decantation. After the aqueous phase was removed, 500 parts by mass of methylene chloride, 3000 parts by mass of pure water and 10 parts by mass of acetic acid were added to stop the reaction, and the resulting mixture was stirred at 15 °C for 30 minutes. Thereafter, the organic phase was washed with pure water ten times, and the organic phase was poured into methanol to precipitate a polymer. After the precipitated polymer was filtered, the polymer was vacuum-dried at 165 °C for 24 hours to obtain a polyarylate resin.

When the resulting polyarylate resin was subjected to composition analysis, the resin composition was the same as the charge composition as follows: BisMIBK: PTBP: DEDC: TBBAC: NaOH = 100.00: 2.90: 101.45: 0.42: 213.05 (molar ratio).

### Examples 2 to 9 and Comparative Examples 1 to 6

The same operation as that of Example 1 was performed except that the resin composition was changed as shown in Table 1, and the corresponding polyarylate resins were obtained.

Results of assessment of the polyarylate resins obtained in Examples 1 to 9, and Comparative Examples 1 to 6 are shown in Table 1.

**[Table 1]**

| | Resin composition (molar ratio) | | Assessment | | | | | | | | | | |
|---|---|---|---|---|---|---|---|---|---|---|---|---|---|
| | Dihydric phenol | Aromatic dicarboxylic acid chloride | Mn | Mw | Tg | Thermal decomposition temperature | Water vapor permeation coefficient | Tensile breaking strength | Tensile breaking elongation | Deformation-resisting properties Loss elasticity (E") | Solubility properties | | Liquid sag-resisting properties Viscosity stabilization time |
| | | | k | k | °C | °C | g•cm /(m²•day) | MPa | % | GPa | Xylene | Cyclohexanone | min. |
| Example 1 | BisMIBK | DEDC | 38 | 108 | 200Δ | 412⊙ | 0.49⊙ | 73Δ | 68○ | 0.04⊙ | ⊙ | ⊙ | 10Δ |
| Example 2 | BisMIBK/TMBP=9/1 | DEDC | 31 | 106 | 205Δ | 410⊙ | 0.49⊙ | 77Δ | 66○ | 0.06⊙ | ⊙ | ⊙ | 13Δ |
| Example 3 | BisMIBK/TMBP=7/3 | DEDC | 35 | 110 | 217○ | 404⊙ | 0.52⊙ | 89○ | 66○ | 0.06⊙ | ⊙ | ⊙ | 15○ |
| Example 4 | BisMIBK/TMBP=5/5 | DEDC | 33 | 110 | 230⊙ | 392⊙ | 0.61⊙ | 97⊙ | 65○ | 0.11⊙ | ⊙ | ⊙ | 25⊙ |
| Example 5 | BisMIBK/TMBP=5/5 | DEDC/TPC=7/3 | 35 | 106 | 240⊙ | 401⊙ | 0.61⊙ | 102⊙ | 76⊙ | 0.11⊙ | ⊙ | ⊙ | 25⊙ |
| Example 6 | BisMIBK/TMBP=5/5 | DEDC/TPC=6/4 | 31 | 105 | 238⊙ | 398⊙ | 0.61⊙ | 102⊙ | 76⊙ | 0.11⊙ | ⊙ | ⊙ | 25⊙ |
| Example 7 | BisMIBK/TMBP=3/7 | DEDC | 40 | 129 | 241⊙ | 382○ | 0.79Δ | 107⊙ | 63Δ | 0.18Δ | ○ | ⊙ | 28⊙ |
| Example 8 | BisMIBK/TMBP=1/9 | DEDC | 41 | 120 | 250⊙ | 375Δ | 0.80Δ | 115⊙ | 62Δ | 0.20Δ | ○ | ○ | 30⊙ |
| Example 9 | BisA/BisMIBK=3/7 | DEDC | 39 | 125 | 204Δ | 413⊙ | 0.63⊙ | 88○ | 73⊙ | 0.140 | ⊙ | ⊙ | 11Δ |
| Comparative Example 1 | BisA | DEDC | 37 | 144 | 218○ | 417⊙ | 0.81× | 99⊙ | 91⊙ | 0.21× | × | ○ | 15○ |
| Comparative Example 2 | BisS | DEDC | 40 | 118 | 220○ | 420⊙ | 0.83× | 101⊙ | 81⊙ | 021× | × | ○ | 13Δ |
| Comparative Example 3 | BP | DEDC | 37 | 115 | 268⊙ | 368× | 0.90× | 123⊙ | 76⊙ | 0.23× | × | × | 14Δ |
| Comparative Example 4 | TMBP | DEDC | 39 | 92 | 260⊙ | 368× | 0.95× | 125⊙ | 72⊙ | 0.22× | × | × | 30⊙ |
| Comparative Example 5 | BisA/TMBP=3/7 | DEDC | 42 | 130 | 243⊙ | 380○ | 0.90× | 115⊙ | 61Δ | 0.26× | × | × | 28⊙ |
| Comparative Example 6 | BisMIBK | MPC | 36 | 94 | 184× | 434⊙ | 0.49⊙ | 64× | 112⊙ | 0.04⊙ | ⊙ | ⊙ | 5× |

| | | | | | | | | | | | | | |
|---|---|---|---|---|---|---|---|---|---|---|---|---|---|
| BisMIBK: 2,2-Bis(4-hydroxyphenyl)-4-methylpentane, BP: 4,4'-Biphenol,TMBP: 3,3',5,5'-Tetramethyl-4.4'-biphenol,BisA: Bisphenol A,BisS: Bisphenol S, DEDC: Diphenyl ether-4,4'-dicarboxylic acid chloride, TPC: Terephthalic acid chloride BisMIBK: 2,2-Bis(4-hydroxyphenyl)-4-methylpentane TMBP: 3,3',5,5-Tetramethyl-4,4'-biphenol BisA: Bisphenol A DEDC: Diphenyl ether-4,4'-dicarboxylic acid chloride TPC: Terephthalic acid chloride MPC: Isophthalic acid chloride/terephthalic acid chloride = 1/1 (molar ratio) mixture | | | | | | | | | | | | | |

Since the polyarylate resins of Examples 1 to 9 were formed by the dihydric phenol residue and the aromatic dicarboxylic acid residue defined by the present invention, the glass transition temperature and the thermal decomposition temperature were high, and solubility properties in xylene and cyclohexanone were also high. Additionally, the water vapor permeability coefficient and the loss elasticity (E") when prepared into a film were low, and tensile breaking strength and tensile breaking elongation were high. Additionally, the viscosity stabilization time was long.

Since the polyarylate resins of Comparative Examples 1 and 2 were not formed by a monomer which provides a residue shown in general formula (1), but were formed by bisphenol A or bisphenol S as the dihydric phenol component, solubility properties in xylene and cyclohexanone were low, and the water vapor permeability coefficient and the loss elasticity (E") when prepared into a film were high.

Since the polyarylate resins of Comparative Examples 3 and 4 were not formed by a monomer which provides a residue shown in general formula (1) as the dihydric phenol component, thermal decomposition properties were low, solubility properties in xylene and cyclohexanone were low, and the water vapor permeability coefficient and the loss elasticity (E") when prepared into a film were high.

Since the polyarylate resin of Comparative Example 5 was not formed by a monomer which provides a residue shown in general formula (1) as the dihydric phenol component, but was formed by only a monomer which provides a residue shown in general formula (3), the water vapor permeability coefficient was high, solubility properties in xylene and cyclohexanone were low, and the loss elasticity (E") was high.

Since the polyarylate resin of Comparative Example 6 was not formed by a monomer which provides a residue shown in general formula (2) as the aromatic dicarboxylic acid component, a glass transition temperature was low, tensile breaking strength was low, and the viscosity stabilization time was short.

### INDUSTRIAL APPLICABILITY

The polyarylate resin of the present invention, a film formed from the same and a laminate having a layer of the polyarylate resin can be suitably used in the electric and electronic material fields as a substrate film of a liquid crystal display, a film condenser, illumination, a solar battery, a printed circuit etc.

## Claims

1. A polyarylate resin comprising a dihydric phenol residue shown in general formula (1) and an aromatic dicarboxylic acid residue shown in general formula (2), 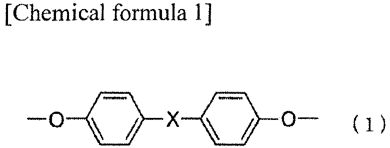 wherein X represents a linear or branched bivalent hydrocarbon group having 4 to 8 carbon atoms, 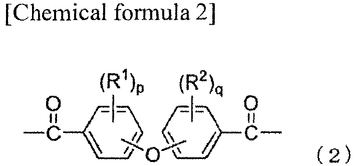 wherein R¹ and R² each independently represent a monovalent hydrocarbon group having 1 to 6 carbon atoms, which may be substituted with one or more halogen atoms, or a halogen atom, and p and q independently represent an integer of 0 to 4.

2. The polyarylate resin of Claim 1, wherein a content of the dihydric phenol residue shown in general formula (1) is 5 to 100 mol% based on residues of all dihydric phenol components.

3. The polyarylate resin of Claim 1 or 2, wherein a content of the aromatic dicarboxylic acid residue shown in general formula (2) is 50 to 100 mol% based on residues of all aromatic dicarboxylic acid components.

4. The polyarylate resin of any one of Claims 1 to 3, further comprising a dihydric phenol residue shown in general formula (3), 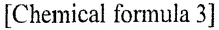 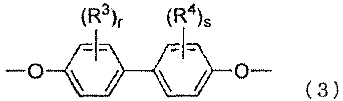 wherein R³ and R⁴ each independently represent a monovalent hydrocarbon group having 1 to 6 carbon atoms, which may be substituted with one or more halogen atoms, or a halogen atom, and r and s each independently represent an integer of 0 to 4.

5. The polyarylate resin of Claim 4, wherein a molar ratio of residues shown in general formula (1) and general formula (3) is 20/80 to 80/20, as expressed by [residue shown in general formula (1)]/[residue shown in general formula (3)].

6. The polyarylate resin of Claim 4 or 5, wherein the dihydric phenol residue shown in general formula (3) is a 3,3',5,5'-tetramethyl-4,4'-biphenol residue.

7. The polyarylate resin of any one of Claims 1 to 6, wherein the dihydric phenol residue shown in general formula (1) is a 2,2-bis(4-hydroxyphenyl)-4-methylpentane residue.

8. The polyarylate resin of any one of Claims 1 to 7, wherein the aromatic dicarboxylic acid residue shown in general formula (2) is a diphenyl ether-4,4'-dicarboxylic acid residue.

9. The polyarylate resin of any one of Claims 1 to 8, further comprising a phthalic acid residue shown in general formula (4).

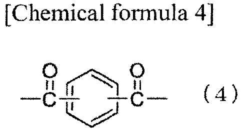

10. The polyarylate resin of Claim 9, wherein a content of the phthalic acid residue shown in general formula (4) is 20 to 50 mol% based on all aromatic dicarboxylic acid components.

11. A film comprising the polyarylate resin as defined in any one of Claims 1 to 10.

12. A laminate comprising a layer of the polyarylate resin as defined in any one of claims 1 to 10 provided on a substrate.
